# NEUE EUROPÄISCHE PATENTSCHRIFT

(11) **EP 2 596 275 B2**
(45) Veröffentlichungstag und Bekanntmachung des Hinweises auf die Entscheidung über den Einspruch: **14.06.2023**
(45) Hinweis auf die Patenterteilung: 21.02.2018
(21) Anmeldenummer: 11728185.7
(22) Anmeldetag: 24.06.2011
(51) Int. Cl.: F16L 53/00

(54) **BEHEIZBARE MEDIENLEITUNG**
HEATABLE FLUID LINE
CONDUITE CHAUFFABLE POUR FLUIDES

(30) Priorität: 23.07.2010 DE 102010032188
(43) Veröffentlichungstag der Anmeldung: 29.05.2013
(73) Patentinhaber: Voss Automotive GmbH, 51688 Wipperfürth (DE)
(72) Erfinder: SCHWARZKOPF, Otfried, 51515 Kürten (DE); BERG, Manfred, 51688 Wipperfürth (DE); BRANDT, Josef, 51688 Wipperfürth (DE); ETSCHEID, Tobias, 51789 Lindlar (DE); HEIENBROK, Mark, 51766 Engelskirchen (DE); ISENBURG, Marco, 40885 Ratingen (DE); SCHÖNEBERG, Christoph, 42929 Wermelskirchen (DE); JESCHONNEK, Markus, 51688 Wipperfürth (DE)
(74) Vertreter: Rebbereh, Cornelia
(86) Internationale Anmeldenummer: PCT/EP2011/003135
(87) Internationale Veröffentlichungsnummer: WO 2012/010245

(56) Entgegenhaltungen:
- WO-A1-2005/124219
- WO-A1-2008/023021
- WO-A1-2008/131993
- WO-A1-2009/052849
- WO-A1-2010/057819
- CN-A- 101 476 659
- DE-A1- 10 344 137
- DE-A1-102008 034 238
- DE-U1-202006 003 590
- DE-U1-202007 007 849
- DE-U1-202007 010 502
- DE-U1-202007 018 089
- DE-U1-202008 003 908
- US-A- 4 937 429

## Beschreibung

Die Erfindung betrifft eine beheizbare Medienleitung mit zumindest einem Leitungsverbinder und Heizelement, wobei das Heizelement zwei Litzen aufweist, sowie ein Verfahren zum Herstellen einer beheizbaren Medienleitung, umfassend die Medienleitung, zumindest einen Leitungsverbinder, einen Übergangsbereich zwischen Medienleitung und Leitungsverbinder und zumindest ein Heizelement, wobei das Heizelement zwei Litzen aufweist.

Derartige beheizbare Medienleitungen und Verfahren zu deren Herstellung sind im Stand der Technik bekannt. Insbesondere in Fahrzeugen sind eine Reihe von Medienleitungen vorgesehen zum Leiten von zumeist flüssigen Medien. Diese Medienleitungen drohen bei niedrigen Temperaturen einzufrieren, weswegen eine Beheizung vorgesehen wird. Leitungsverbinder dienen zum Verbinden von zumindest zwei Medienleitungen oder zur Anschlussverbindung einer Medienleitung mit einem beliebigen Aggregat. Durch die Medienleitungen werden oftmals solche Medien geführt, die aufgrund eines relativ hohen Gefrierpunktes bereits bei noch recht hohen Umgebungstemperaturen zum Gefrieren neigen, wodurch die Funktionsfähigkeit beispielsweise eines Fahrzeugs beeinträchtigt oder sogar erheblich gestört werden kann. Ersichtlich ist dies insbesondere bei Wasserleitungen für Scheibenwaschanlagen der Fall, ebenso wie bei Medienleitungen mit einer wässrigen Harnstofflösung als Medium, die als NOx -Reaktionsadditiv für Dieselmotoren mit sogenannten SCR-Katalysatoren eingesetzt werden.

Aus der EP 1 985 908 A1 ist ein Leitungsverbinder für Medienleitungen bekannt, der aus einem Verbinderstück mit Anschlussabschnitt zur Anschlussverbindung mit der Medienleitung oder einem Aggregat und mit einem an den Anschlussabschnitt angrenzenden Übergangsabschnitt mit einem Strömungskanal besteht. Zumindest im Bereich des Übergangsabschnitts sind elektrische Heizmittel in einer den Strömungskanal zumindest teilweise umschließenden Anordnung vorgesehen. Die somit im Übergangsabschnitt, also außerhalb des Anschlussabschnitts angeordneten elektrischen Heizmittel dienen dazu, ein Einfrieren des jeweiligen Mediums innerhalb des Verbindungsstücks zu vermeiden oder aufzuheben durch Auftauen des eingefrorenen Mediums. Der Heizdraht umgibt das Verbinderstück außenseitig spulenartig gewickelt, wobei im Innenbereich zumindest eine weitere Spulenwicklung im Bereich des Strömungskanals angeordnet wird, so dass durch Fließen eines Stroms durch den äußeren Heizdraht eine Induktion in der inneren Spulenwicklung zum Erzeugen von Wärme vorgesehen ist. Die Medienleitung besteht aus einer inneren Rohrleitung mit einem am Umfang angeordneten Heizleiter, wobei Rohrleitung und Heizleiter von einer äußeren Umhüllung umschlossen werden, wie durch ein Wellrohr. An den beiden Enden der Medienleitung werden Leitungsverbinder angeschlossen. Der auf der Rohrleitung angeordnete Heizleiter wird vor dem Auffügen des Wellrohres mit einem Klebeband umwickelt und hierdurch an der Rohrleitung fixiert. Alternativ wird vorgeschlagen, eine Lack- oder Kleberschicht zur Fixierung vorzusehen. Die Heizdrähte der Leitungsverbinder und die Heizleitung der Rohrleitung sind miteinander elektrisch verschaltet, wobei jeweils der Heizdraht eines der Leitungsverbinder mit einem der Wicklungsdrähte der die Rohrleitung umgebenden Heizleitung elektrisch in Reihe geschaltet und die Anschlussenden der beiden Reihenschaltungen an den beiden Leitungsverbindern nach außen geführt werden, wo ein Anschluss an eine Spannungsversorgung bzw. eine Weiterverbindung vorgesehen ist. Alternativ ist offenbart, dass die Heizdrähte der Leitungsverbinder und der die Rohrleitung umgebenden Wicklungen als elektrische Reihenschaltung aller Heizdrähte vorgesehen ist mit nur einem äußeren Leitungsanschluss. In jedem der Fälle wird die Rohrleitung zunächst mit den Heizdrähten bewickelt und nachträglich abgelängt, bevor eine Verbindung mit den beiden Leitungsverbindern und den darauf aufgefügten Heizdrähten erfolgt. Dies ist beispielsweise in der DE 10 2005 037 183 B3 bzw. der EP 1 519 098 B1 offenbart.

Entsprechend der DE 10 2005 037 183 B3 wird die Rohrleitung zunächst als Endlosrohr ausgebildet und nachfolgend auf eine bestimmte Länge abgelängt. Diese Rohrleitung umfasst bereits die Heizleitung als elektrisch leitfähige Kunststoffschicht. Alternativ wird in dieser Druckschrift des Standes der Technik offenbart, dass die elektrischen Zuleitungen in das Rohr eingeschmolzen werden. Ferner ist offenbart, dass die Rohrleitung Nuten aufweisen kann, die bis zum Heizwiderstand reichen und in die elektrischen Zuleitungen eingeclipst oder eingeklebt werden. Die elektrischen Zuleitungen können ansonsten mit dem Heizwiderstand und gegebenenfalls weiteren Bestandteilen der Rohrleitung extrudiert werden, so dass die elektrischen Zuleitungen und der Heizwiderstand gemeinsam z.B. innerhalb eines Extrusionsprozesses hergestellt werden.

Entsprechend der EP 1 519 098 B1 ist bei einer elektrisch beheizbaren Medienleitung bzw. Flüssigkeitsleitung der Heizdraht wendelförmig um eine innere Kunststoffschicht herumgewickelt und unmittelbar um die Kunststoffschicht um den Heizdraht herum ein elektrisch isolierendes Band gewickelt. Der Heizdraht ist dabei in Form einer Doppelwendel um die Kunststoffschicht herumgewickelt und die Enden des Heizdrahtes sind mit einem Stecker verbunden, der in eine Steckdose einer Spannungsquelle eingesteckt werden kann.

Aus der EP 1 721 097 B1 ist ferner eine elektrisch beheizbare Medienleitung bekannt, bei der die Medienleitung, ein Kabel zum Beheizen der Medienleitung und zumindest ein elektrischer Verbinder zum Verbinden des Kabels mit einer Stromquelle vorgesehen sind. Die Medienleitung und das Kabel sind vollständig in einer äußeren Schutzhülle aufgenommen, die einen ersten Schlauch mit einem inneren Querschnitt aufweist, der den äußeren Querschnitt der Medienleitung übersteigt. An einem oder zwei Enden der Verkabelung ist das Kabel von der Medienleitung getrennt und innerhalb eines Abzweigstücks geführt. Es wird zu einem zweiten Schlauch an dem elektrischen Verbinder geführt. Die äußere Schutzhülle umfasst den ersten Schlauch, das Abzweigstück und den zweiten Schlauch, wobei das Abzweigstück zwischen dem ersten und zweiten Schlauch angeordnet ist. Zumindest einseitig ist somit das Kabel nicht zu einem Leitungsverbinder geführt, sondern direkt in die abzweigende Leitung und dort zu einem Steckverbinder zum Anschließen an eine elektrische Energiequelle. Der Leitungsverbinder wird somit entsprechend dieser Druckschrift des Standes der Technik nicht beheizt, sondern lediglich die Medienleitung.

Aus der EP 2 107 291 A2 ist eine Fluidleitung bekannt, bei der Leitungsverbinder an den Enden einer elastischen Rohrleitung angebracht werden. Ein Heizleiter wird in die Rohrleitung eingebracht und deren Enden werden zwischen Leitungsverbindungsabschnitten eingepresst, die in den Leitungsverbindern angeordnet sind. Der Heizleiter ist mit einem Anschlussdraht durch einen Verbindungsabschnitt verbunden und hierdurch mit einer Energiequelle. Der Heizleiter ist zur Schlaufe gelegt innerhalb der Rohrleitung und endet im Bereich der Schlaufe vor dem zweiten Leitungsverbinder. Aufgrund des innerhalb der Rohrleitung liegenden Heizleiters ist zwar eine direkte Wärmeeinkopplung in das innerhalb der Medienleitung bzw. Rohrleitung fließende Medium möglich, jedoch müssen die Litzen des Heizleiters eine hohe Beständigkeit gegenüber dem in der Medienleitung strömenden Medium aufweisen, so dass sich bezüglich des Heizleiters verhältnismäßig hohe Kosten ergeben. Weiter erweist es sich als mühsam, den zur Schlaufe, also doppelt gelegten Heizleiter in die Rohrleitung einzubringen in einer gewünschten gewendelten oder geschlängelten Anordnung. Ferner sind auch die Kosten für eine solche Rohrleitung höher als bei Rohrleitungen, bei denen der Heizleiter auf deren Außenseite geführt wird, da der lichte Durchmesser, ggf. auch die Wandstärke, einer solchen Rohrleitung, in deren Innerem der Heizleiter geführt wird, vergleichsweise größer sein muss, um diese unterbringen zu können, ohne ein Strömungshindernis für das Medium zu schaffen.

Die DE 20 2007 010 502 U1 offenbart eine konfektionierte Medienleitung mit einem Leitungsverbinder, bestehend aus einem Verbinderkörper mit einem Anschlussabschnitt, an dem eine Medienleitung angeschlossen ist, und mit einem Kupplungsabschnitt zum dichtenden Verbinden mit einem Gegenkupplungsteil. Die Medienleitung ist mit einem Heizdraht versehen. Der Verbinderkörper und die Medienleitung sind endseitig von einem insbesondere aus Gehäuseschalen gebildeten Gehäuse umschlossen, wobei die Dichtfunktion und eine Haltefunktion zwischen dem Gehäuse und dem Verbinderkörper aufgeteilt sind.

Die WO 2010/057819 A1 offenbart einen Leitungsverbinder für Medienleitungen, der aus einem Verbinderstück mit einem Strömungskanal und mit zumindest einem Anschlussabschnitt zur Anschlussverbindung mit der Medienleitung oder mit einem Aggregat und mit zumindest einem an den Anschlussabschnitt angrenzenden Übergangsabschnitt besteht. Um bei tiefen Temperaturen ein Gefrieren des jeweiligen Mediums im Verbinderbereich zu verhindern bzw. ein eingefrorenes Medium aufzutauen, sind Heizmittel in einer dem Strömungskanal zumindest teilweise umschließenden Anordnung vorgesehen, wobei am Verbinderstück ein Fixierteil mit Elementen zur Führung und Fixierung der Heizmittel angeordnet ist. Die Heizmittel sind sowohl am gesamten Verbinderstück als auch insbesondere am Fixierteil in zumindest zwei Ebenen, insbesondere drei Ebenen, mit jeweils unterschiedlichem Abstand zum Strömungskanal geführt. Die Anordnung der Heizmittel in verschiedenen Ebenen gestattet es, Leitungslängen, die als Montagelängen für ein Crimpen notwendig sind und insbesondere 20 bis 25 mm betragen, in geeigneter platzsparender Weise am Verbinderstück unterzubringen.

Der DE 10 2008 034 238 A1 ist eine Anschlussvorrichtung für medienführende elektrisch beheizbare Schläuche, die als Steckverbinder ausgebildet ist, zu entnehmen, wobei zumindest ein Schlauchende einen Steckverbinder aufweist. Dieser ist auf ein bauseitig an einem Kraftfahrzeugaggregat angebrachtes Gegen-Steckverbinderteil aufsteckbar. Der elektrisch beheizbare Schlauch ist mit zumindest einem eingebetteten elektrischen Heizleiter versehen, dessen Enden aus dem Schlauch zur Konfektion mit einem Stecker in den schlauchseitigen Steckverbinder hineingeführt und in einer innenliegenden Kontaktstelle mit nach außen ragenden Steckkontakten leitend verbunden sind. Die freien Enden der beiden Heizleiter werden im Bereich des Anschlussstutzens über zwei Durchbrechungen im Gehäuse des Steckverbinders in dessen Inneres geführt und dort an zwei benachbart zueinander angeordneten Kontaktblechen befestigt.

Die WO 2008/023021 A1 offenbart eine Harnstoffleitung mit einem hohlen Verbinder, der die Verbindung zu einem Harnstofftank ermöglicht und eine Durchgangsöffnung für den Harnstoff aufweist. Der Verbinder ist zudem mit einem Heizdraht versehen, wobei zumindest ein Teil von diesem sich frei innen in der Durchgangsöffnung erstreckt. Dieser sich frei erstreckende Teil weist die Form einer Spirale auf und ist ebenfalls geeignet, um sich zumindest teilweise in den Tank und/oder in ein damit verbundenes Rohr zu erstrecken. Ein elektrischer Anschluss ist durch Aufschnappen an dem Verbinder befestigt und umspritzt um zwei Enden des Heizdrahtes.

Als teuer erweisen sich die bei dem Vorsehen von mit Heizdraht umwickelten Leitungsverbindern und separat mit Heizdraht versehener Rohrleitung das Verbinden der jeweiligen Heizdrähte von Leitungsverbindern und Rohrleitung, da dies zeitaufwändig ist und zum Sicherstellen einer ordnungsgemäßen elektrischen Verbindung auch sehr sorgfältig erfolgen muss, somit die Fertigung hierdurch recht lange dauert. Bei einem kontinuierlichen Bewicklungsprozess könnte eine Rohrleitung mit Heizdraht umwickelt und mit Klebe- bzw. Gewebeklebeband vorkonfektioniert und auf Coils bevorratet werden. Für die jeweils herzustellende beheizbare Medienleitung würde sodann das umwickelte Rohr in der gewünschten Länge abgelängt, das Klebe- bzw. Gewebeklebeband an den beiden Enden des abgelängten Rohres entfernt, die jeweiligen Heizdrahtenden dort wieder abgewickelt, die Rohrüberlänge abgeschnitten, das Rohr nachgeschnitten und die Trennstellen gereinigt. An einem Leitungsverbinder der ebenfalls mit einer Heizdrahtumwicklung vorkonfektioniert werden könnte, wären ebenfalls die Litzen des Heizdrahtes endseitig wieder abzuwickeln, um mit den Heizdrahtenden der Medienleitung verbunden werden zu können. insbesondere über Crimpstellen. Einerseits wären somit eine Reihe von Bearbeitungsschritten erforderlich, um die beheizbare Medienleitung, enthaltend das umwickelte Rohr und die Leitungsverbinder, herzustellen bzw. zunächst einmal Rohr und Leitungsverbinder bzw. die darauf angeordneten Heizdrähte miteinander zu verbinden. Aufgrund des Vorkonfektionierens des mit Heizdraht und Gewebeklebe- bzw. Klebeband versehenen Rohres, das später anwendungsbestimmt abgelängt würde, träte hier andererseits ein großer Verschnitt auf und somit hohe Materialkosten sowie durch Rückwickeln bzw. Abwickeln von Heizdraht an den Enden des Rohres und des Leitungsverbinders, Reinigen und Nachschneiden des Rohres zum Schaffen freier Litzenlänge des Heizdrahtes zum Kontaktieren desselben sowie durch das Vorsehen von Crimpstellen, auch hohe Personalkosten bei der Herstellung. Außer dem Materialverlust durch Verschnitt ergäben sich somit Kosten durch den verhältnismäßig hohen Fertigungsaufwand, wobei zumeist eine händische Fertigung erforderlich wäre. Bei der späteren Verwendung der beheizbaren Medienleitung bspw. in einem Fahrzeug, insbesondere Lastkraftwagen, sind diese Erschütterungen ausgesetzt, so dass hier Beschädigungen auftreten können, die zu Kurzschlüssen führen können.

Der vorliegenden Erfindung liegt nun die Aufgabe zugrunde, eine beheizbare Medienleitung vorzusehen, bei der ein möglichst geringer Fertigungsaufwand bei zugleich sehr guter Wärmeeinkopplung in das innerhalb der Medienleitung strömende Medium sowohl im Bereich der Leitungsverbinder als auch im Bereich der sich zwischen diesen erstreckenden Medienleitung ermöglicht wird.

Die Aufgabe wird durch eine beheizbare Medienleitung nach dem Oberbegriff des Anspruchs 1 dadurch gelöst, dass sich ein und dieselben Litzen durchgängig sowohl entlang der Medienleitung als auch entlang dem zumindest einen Leitungsverbinder erstrecken, wobei die zwei Litzen sich verbindungsstellenfrei im Übergangsbereich zwischen Medienleitung und Leitungsverbinder und durchgängig entlang dem Leitungsverbinder und der Medienleitung auf deren jeweiliger Außenseite erstrecken, wobei ein beide Litzen verbindendes Bügelelement an einem Aufnahmezapfen auf der Außenseite des einen Leitungsverbinders festgelegt ist oder den Aufnahmezapfen umschlingt. Die Aufgabe wird auch durch ein Verfahren zum Herstellen einer beheizbaren Medienleitung nach dem Oberbegriff des Anspruchs 8 gelöst, wobei die Medienleitung mit dem zumindest einen Leitungsverbinder vorkonfektioniert wird, die ein oder zwei Litzen des Heizelements als doppelt gelegtes ein- oder zweiteiliges oder zu einem durchgehenden Teil verbundenes Element vorkonfektioniert werden, die Litze(n) auf der Außenseite von Leitungsverbinder, Übergangsbereich und Medienleitung angeordnet, festgelegt und die Enden der Litze(n) in einen Einspeiseverbinder zum Anschließen an eine Strom- oder Spannungsquelle geführt werden, wobei auf der Außenseite des einen Leitungsverbinders ein Aufnahmezapfen angeordnet ist, und wobei eine aus einer doppelt gelegten Litze gebildete Schlaufe oder ein beide Litzen verbindendes Bügelelement an dem Aufnahmezapfen auf der Außenseite des einen Leitungsverbinders festgelegt wird oder den Aufnahmezapfen umschlingt und die Litze(n) durchgehend entlang dem Leitungsverbinder, dem Übergangsbereich und der Medienleitung auf deren Außenseite geführt oder gewunden wird/werden. Weiterbildungen der Erfindung sind in den abhängigen Ansprüchen definiert.

Dadurch wird eine beheizbare Medienleitung geschaffen, bei der es nicht mehr erforderlich ist, die Medienleitung mit aufgebrachten Heizelementen in der gewünschten Länge abzulängen und nachfolgend mühsam die Enden der Heizelemente oder Litzen, die die Medienleitung umgeben, und der Heizelemente, die die Leitungsverbinder umgeben, miteinander zu verbinden, insbesondere zu crimpen und abzudichten, insbesondere mit Schrumpfschlauch zu versehen. Vielmehr dienen ein und dieselben Litzen, die sich entlang der Medienleitung erstrecken, auch zum Beheizen des oder der Leitungsverbinder und erstrecken sich entsprechend auch entlang von diesem/diesen. Es wird also ein gemeinsames Heizelement zum Beheizen der Medienleitung und des oder der Leitungsverbinder verwendet. Dessen Litzen erstrecken sich somit unterbrechungsfrei entlang der Medienleitung und entlang dem zumindest einen Leitungsverbinder. Auf das Vorsehen zusätzlicher Litzen für das Beheizen der Leitungsverbinder wird im Unterschied zum Stand der Technik verzichtet, so dass die ansonsten auf den vorkonfektionierten Leitungsverbindern vorgesehenen Litzen und entsprechend auch die bei diesen erforderlichen Verbindungsstellen zwischen diesen Litzen und denen entlang der Medienleitung entfallen. Verbindungsstellen zwischen Medienleitung und Leitungsverbinder sind somit nicht vorgesehen, jedoch kann eine Verbindungsstelle zwischen zwei Litzen oder zu Kaltleitern zum Anschließen der Litzen des Heizelements an eine Strom- oder Spannungsversorgung vorgesehen sein.

Die zwei Litzen erstrecken sich verbindungsstellenfrei im Übergangsbereich zwischen Medienleitung und Leitungsverbinder und auch durchgängig entlang dem Leitungsverbinder selbst sowie der Medienleitung auf deren jeweiliger Außenseite. Hierdurch ist es möglich, den gesamten Übergangsbereich zwischen Medienleitung und Leitungsverbinder frei von Verbindungsstellen zu halten. Gerade in dem Übergangsbereich von der zumeist weniger starren Medienleitung zu den recht starren Leitungsverbindern könnten Verbindungsstellen besonders anfällig für Beschädigungen sein, die durch Schwingungen hervorgerufen werden. Hier keine Verbindungsstellen zu Kaltleitern oder der insbesondere zwei sich durchgängig entlang von Medienleitung und Leitungsverbinder erstreckenden Litzen vorzusehen, erweist sich daher als vorteilhaft.

Durch das Vorsehen der zwei Litzen des Heizelementes, die sich durchgängig entlang von Medienleitung und Leitungsverbinder(n) erstrecken, entfallen nicht nur die Verbindungsstellen dort, sondern durch das Vorsehen lediglich zweier Litzen sind auch weniger Material und entsprechend weniger Kosten hierfür aufzuwenden. Es sind für eine Medienleitung somit weniger Heizlitzenvarianten zu bevorraten, so dass Skaleneffekte auftreten, also Effizienzvorteile, die sich in einer Senkung der Stückkosten widerspiegeln, da größere Einkaufsmengen lediglich in einer geringen Litzenvarianz möglich sind.

Da sich die Litzen auf der Außenseite der Medienleitung und der Leitungsverbinder erstrecken, ist es ebenfalls nicht erforderlich, auf eine besondere Litzenbeständigkeit gegenüber dem innerhalb der Medienleitung zu führenden Medium zu achten. Somit können auch hier kostengünstigere Litzen als beispielsweise bei der Lösung gemäß der EP 2 107 291 A2 gewählt werden. Somit ist es vorteilhaft möglich, Kosten gegenüber den bestehenden Lösungen einzusparen und zugleich aufgrund des durchgängigen Umwickelns bzw. Vorsehens der Litzen des Heizelementes entlang den Leitungsverbindern und der Medienleitung das Risiko von unzureichenden Verbindungen oder eines ungewollten Brechens von Verbindungsstellen, beispielsweise durch Erschütterungen, Schwingungen oder andere negative Beaufschlagungen beim Betrieb eines Fahrzeugs, zu minimieren bzw. gänzlich zu vermeiden.

Crimpstellen von Heizdrähten sind im Prinzip Sollbruchstellen, da sie insbesondere bei dauerhafter Beaufschlagung mit Querkräften zum Brechen neigen. Hierdurch tritt nicht nur ein Qualitätsproblem auf, sondern insbesondere bei schadhafter Isolation auch die Gefahr eines Kurzschlusses. Dies kann nun durch das Vorsehen verbindungsstellenfreier Litzen vorteilhaft vermieden werden.

Die Integration der Litze(n) des Heizelements und der Leitungsverbinder bzw. Medienleitung kann auf einfache Art und Weise dadurch erfolgen, dass die Medienleitung mit dem zumindest einen Leitungsverbinder bereits vorkonfektioniert wird und erst nachfolgend die entsprechend geeignet abgelängte(n) Litze(n) des Heizelements entlang der Medienleitung und dem zumindest einen Leitungsverbinder auf deren Außenseite angeordnet und dort festgelegt wird/werden. Bei Vorsehen lediglich einer Litze des Heizelementes wird diese doppelt gelegt, also eine Schlaufe gebildet, die am Leitungsverbinder festgelegt wird. Die Enden der Litze oder Litzen werden nachfolgend in einen Einspeiseverbinder zum Anschließen an einer Strom- oder Spannungsquelle geführt. Sind zwei Litzen vorgesehen, werden diese parallel entlang dem zumindest einen Leitungsverbinder, dem Übergangsbereich zur Medienleitung und entlang von dieser geführt.

Die Litzen sind über eine Einrichtung miteinander verbunden. Insbesondere können bei Vorsehen zweier verbundener Teile zwei gleiche Litzen vorgesehen sein. Werden die Litzen zu einem durchgehenden Teil verbunden, bevor sie mit der Medienleitung verbunden werden, kann der Aufwand für die Integration der Litzen des Heizelementes und der Medienleitung so gering wie möglich gehalten werden. Es können zwei Litzen parallel zueinander geführt, jedoch nur über ein Bügelelement miteinander verbunden werden, um ein Festlegen der Litzen auf der Außenseite eines Leitungsverbinders zu ermöglichen.

Endseitig an der oder den Litzen kann zumindest eine Abzweig- oder Anschlussstelle vorgesehen sein zum Anschließen eines Verbinders zum Anschließen an eine Energieversorgung. Aufgrund des Vorsehens einer einteiligen Litze oder von zu einem Teil verbundenen Litzen kann ein solcher Kaltleiteranschluss, also eine solche Abzweig- oder Anschlussstelle zum Anschließen eines Kaltleiters zum Verbinden mit einer Energieversorgung (Strom- oder Spannungsquelle) somit endseitig an der oder den Litzen vorgesehen werden, so dass anstelle einer großen Anzahl von Verbindungs- bzw. Crimpstellen lediglich zwei solcher Stellen, also an beiden Enden der zumindest einen Litze, vorgesehen werden können. Bei Vorsehen eines ursprünglich geteilten Heizelementes mit zwei gleichen Litzen können diese, wie erwähnt, an einem Ende miteinander verbunden und diese Verbindungsstelle des dann durchgehenden Heizelementes innerhalb des zumindest einen Leitungsverbinders festgelegt werden, so dass an den anderen Enden der Litzen wiederum ein Kaltleiter zum Verbinden mit einer Energieversorgung angeschlossen werden kann.

Vorteilhaft erstrecken sich die Litzen leitungsnah auf kürzester Strecke bezogen auf die Leitung um diese herum, vorteilhaft mit einer Steigung von etwa 20 bis etwa 150 mm, insbesondere mit einer Steigung von 40 bis 60 oder bis 80 mm. Sie können dabei mäandriert und/oder in Form von langgestreckten Wellen und/oder vorzugsweise spiralförmig geführt sein. Entlang der Medienleitung reicht es im Prinzip aus, die Litzen parallel zu dieser verlaufen zu lassen und hierüber eine ausreichende Wärmeeinkopplung zu erzielen, wobei zugleich ein effizienter Materialeinsatz bezüglich der Litzenlänge möglich ist. Allerdings erweist es sich beim Formbiegen und Verbinden von Litze und Medienleitung als vorteilhafter, die Litze um die Medienleitung mit einer Steigung herum zu winden. Eine große Steigung ist in der Regel.energetisch ausreichend, ermöglicht also eine ausreichende Wärmeeinkopplung. Sie kann nach technischen Aspekten bis zu 150 mm betragen. Eine Steigung von unendlich, also das Führen der Litzen parallel zur Leitung, wäre energetisch ausreichend, technisch jedoch problematisch. Bei Steigungen von mehr als 150 mm tritt beim Krümmen der Medienleitung das Problem auf, dass die Litze nicht der Biegung der Medienleitung folgt, sondern sich von dieser abhebt. Die günstigste Steigung als Kompromiss aus technischen und wirtschaftlichen Aspekten ist z.B. eine Steigung im Bereich von 40 bis 80 mm, insbesondere im Hinblick auf die Heizelement-Litzenlänge, die vorgesehen werden muss, und die technische Praktikabilität beim Umwickeln der rohrförmigen Medienleitung.

Die die Litzen können entlang der Medienleitung etwa parallel zueinander an zwei einander gegenüberliegenden Seiten der Medienleitung und/oder mit einer sehr großen Steigung, insbesondere einer Steigung von 20 bis 150 mm, z.B. einer Steigung von 40 bis 80 mm, entlang der Medienleitung und/oder langgestreckt mäanderförmig und/oder spiralförmig um die Medienleitung herumgewickelt werden. Bereits bei Vorsehen zweier parallel verlaufender Litzen oder Litzenteile ist ein guter Wärmeeintrag in die Medienleitung möglich.

Zum Erzeugen einer gleichmäßigen Wärmeeinkopplung im Bereich des Leitungsverbinders und der Medienleitung sowie des Übergangsbereichs zwischen Medienleitung und Leitungsverbinder kann eine angepasst unterschiedliche Steigung beim Wickeln vorgesehen sein. Eine große Steigung von bis zu 150 mm kann entsprechend entlang der Medienleitung vorgesehen sein, wohingegen im Übergangsbereich zum Leitungsverbinder und entlang von diesem eine geringere Steigung sinnvoller erscheint, so dass der Wärmeeintrag über die gesamte Länge der beheizbaren Medienleitung hinweg etwa gleich gehalten oder an den Stellen, an denen ein besonders hoher Wärmeeintrag erforderlich ist, erhöht werden kann. Gerade im Bereich der Leitungsverbinder wird die Materialstärke größer sein als über die Längserstreckung der rohrförmigen Medienleitung hinweg, so dass das Vorsehen einer geringeren Steigung beim Umwickeln der Leitungsverbinder und gegebenenfalls auch des Übergangsbereichs zur Medienleitung sich hier als vorteilhaft erweist. Der Einfluss der Steigung der Litzen ist im Bereich der Medienleitung in Bezug auf den Materialeinsatz hoch, da die Medienleitung z.B. 4,5 m betragen kann, wohingegen der Einfluss im Bereich der Leitungsverbinder gering ist, da dort lediglich kurze Abmessungen umwickelt werden. Bezogen auf die Wärmeeinkopplung sind dies 15 Watt pro Meter bei der Medienleitung und 1,5 Watt pro Leitungsverbinder. Im Gegensatz zu der großen Steigung entlang der Medienleitung von insbesondere bis zu 120 mm kann entlang dem Leitungsverbinder z.B. eine Steigung von 3 mm vorgesehen sein.

Bei Vorsehen einer kleinen Steigung im Bereich des Leitungsverbinders kann eine spiralförmige und/oder mäandrierte Wicklung oder eine langgestreckte um die Leitungsverbinder herum vorgesehen werden. Auch Mischformen von mäandrierter, spiralförmiger oder auch langgestreckter Wicklung sowie unterschiedliche Wicklungen an Leitungsverbinder, Übergangsbereich und Medienleitung sind möglich.

Die Litzenstärke des Heizelementes bzw. dessen Durchmesser bzw. die Stärke der Seele des Heizelements, insbesondere der abisolierten metallischen Seele, kann weniger als 0,2 mm betragen, insbesondere 0,12 mm, 0,14 mm, 0,18 mm, jeweils ggf. mit eine Toleranz von ± 0,4 mm. Auch Zwischenwerte sind selbstverständlich möglich, also z.B. eine Litzenstärke von 0,10 mm, 0,11 mm, auch von weniger als 0,12 mm.

Die Medienleitung kann z.B. einen Innendurchmesser von 2 bis 4 mm, insbesondere einen Innendurchmesser von 2 bis 3 mm aufweisen. Das Vorsehen eines solchen Innendurchmessers erweist sich als besonders wirtschaftliche Variante. Die Wandstärke der rohrförmigen Medienleitung kann dabei z.B. 0,5 bis 1 mm betragen, insbesondere 0,7 mm. Der Luftspalt zwischen der Außenseite der rohrförmigen Medienleitung und einem diese sowie die um diese herum gewundene(n) Litze(n) umgebenden Innenseite des Wellrohres kann z.B. etwa 0,1 bis 0,4 mm, insbesondere 0,1 bis 0,2 bzw. 0,2 bzw. 0,2 bis 0,4 mm betragen. Ein solcher Luftspalt ist ausreichend, um eine gute Wärmedämmung zu ermöglichen. Zum Fixieren der Litze(n) des Heizelementes auf der Außenseite der rohrförmigen Medienleitung kann ein Klebeband oder Gewebeband vorgesehen werden. Grundsätzlich eignen sich auch andere Fixiermöglichkeiten, wobei sich das Umwickeln mit einem Klebe-, Gewebeklebe- oder Gewebeband als kostengünstig und bezüglich der Sicherheit der Fixierung ebenfalls als sehr gut erweist.

Das Wellrohr als äußere Schutzeinrichtung für die Medienleitung kann als geschlossenes Wellrohr vorgesehen werden, das bei der Vormontage der Medienleitung mit zunächst einmal einem Leitungsverbinder vom offenen Ende der Medienleitung her über diese und den Übergangsbereich des Leitungsverbinders hinweg geschoben und dort festgelegt werden kann. Bei Vorkonfektionieren der Medienleitung mit bereits zwei Leitungsverbindern wird vorteilhaft eine längsgeschlitzte Ausführungsvariante eines Wellrohres vorgesehen, die nach dem Verbinden der Baugruppe der vormontierten Medienleitung mit endseitigen Leitungsverbindern mit der Baugruppe der Litze(n) des Heizelementes und deren Festlegen auf der Außenseite von Medienleitung, Übergangsbereichen und Leitungsverbindern von der Außenseite die Medienleitung und die beiden Übergangsbereiche umgebend angeordnet wird. Als kostengünstigere Ausführungsvariante erweist sich jedoch das Vorsehen eines radial geschlossenen Wellrohrs.

Für die fertige Montage der beheizbaren Medienleitung werden die Litze(n) an dem einen Leitungsverbinder festgelegt und ihre beiden Teilabschnitte oder die Litzen durchgehend entlang dem Leitungsverbinder, dem Übergangsbereich und der Medienleitung auf deren Außenseite geführt oder verbunden. Ebenfalls ist es möglich, die Litze(n) an beiden Leitungsverbindungen festzulegen und diese nach dem Umwickeln der Leitungsverbinder sowie des Übergangsbereichs zur Medienleitung diese umschlingend anzuordnen. Hier kann ein Toleranzausgleich bewusst dadurch vorgesehen werden, dass die Anzahl der Umschlingungen bzw. die Steigung variiert wird, insbesondere bei Umwickeln der Medienleitung von einem Ende zum anderen. Ebenso kann sich ein Toleranzausgleich automatisch durch Varianz der Steigung ergeben. Die Anordnung der Litze(n) erfolgt beispielsweise durch Anordnen der beiden Leitungsverbinder in entsprechenden Aufnahmen und Vorsehen einer Vorspannung, die an den Litzen oder Litzenteilen entlang der Medienleitung etwa mittig entlang deren Längserstreckung angreift und eine Zugspannung auf diese ausübt, vorallem bei der Drehbewegung zum Winden der Litze(n) um die Medienleitung herum. Hierdurch können die Litzen bzw. Litzenteile um die Medienleitung herumgewickelt werden, wobei durch das Aufbringen der Vorspannung eine gewünschte Positionierung und Steigung der einzelnen Windungen entlang der Medienleitung möglich ist und automatisch ein Toleranzausgleich erfolgt.

Vorteilhaft wird zumindest eine Einrichtung zum Schutz und/oder zur Isolation der Leitung und/oder des Leitungsverbinders und/oder des Übergangsbereichs zwischen Leitung und Leitungsverbinder um diese herum angeordnet, insbesondere ein Wellrohr zur Ummantelung der Medienleitung und Schutzkappen zur Ummantelung des oder der Leitungsverbinder und des Übergangsbereichs zu der Medienleitung, diese umgebend. Derartige Schutzkappen umgeben dann nicht nur die Leitungsverbinder sowie den Übergangsbereich zur Medienleitung, sondern auch einen Teil des diese ummantelnden Wellrohres, so dass eine kompakte Einheit zwischen der rohrförmigen Medienleitung und den Leitungsverbindern zum Ausbilden einer vollständig beheizbaren Medienleitung vorgesehen wird, wobei auch eine Abzweigstelle des Heizelementes zum Anschließen von diesem an einer Energiequelle durch das Ummanteln mit solchen Schutzkappen gegen Beschädigung geschützt werden kann.

Bei Vorsehen insbesondere eines zweilitzigen Heizelementes mit jeweils endseitig angeordneten Steckern, die über Kaltleiter mit den Litzen des Heizelementes verbunden sind, also bei Parallelschaltung zweier Litzen des Heizelementes, kann zumindest ein Bügelelement zwischen die beiden Litzen eingefügt werden zum mechanischen Verbinden der beiden Litzen. Ein solches Bügelelement kann in eine entsprechende Aufnahmeeinrichtung an einem Leitungsverbinder eingehängt und hiermit das Heizelement an dem Leitungsverbinder festgelegt werden.

Ebenfalls ist es möglich, eine doppelt gelegte durchgängige Litze des Heizelementes vorzusehen, an deren Enden direkt ein Verbinder zum Verbinden mit einer Energiequelle angeordnet ist oder wird, so dass das Vorsehen von Verbindungs- bzw. Crimpstellen zwischen der Litze des Heizelementes und Kaltleitern zum Anschließen an eine Energieversorgung vollständig entfallen kann. Ein solches Heizelement bzw. eine solche durchgehende doppelt gelegte Litze wird im Bereich ihrer Schlaufe wiederum an einem Leitungsverbinder an einer dort vorgesehenen Aufnahmeeinrichtung fixiert bzw. festgelegt und nachfolgend um den Leitungsverbinder, den Übergangsbereich zur Medienleitung und die Medienleitung gewunden.

Vorteilhaft kann das Heizelement adaptiv auf der Medienleitung und/oder dem Leitungsverbinder aufgebracht werden, insbesondere können die Litze(n), ein Befestigungsmittel zum Befestigen der Litze(n) auf der Medienleitung und/oder eine Isolations- und/oder Schutzeinrichtung zur Isolation bzw. zum Schutz der Medienleitung und/oder des Leitungsverbinders und/oder des Übergangsbereichs zwischen Medienleitung und Leitungsverbinder adaptiv aufgebracht werden. Eine adaptive Aufbringung bedeutet das Vorsehen der Litze(n) angepasst an die jeweiligen Erfordernisse des Anwendungsfalls. Es können somit Leitungen in verschiedenen Varianten angeboten werden. Hierdurch wird nicht wie beim Stand der Technik eine bei der vorkonfektionierten Medienleitung dort vorgegebene Anordnung und Heizelementmenge verwendet. Vielmehr kann aufgrund des Umwickelns der Baugruppe zum Leiten eines Mediums nach deren Konfektionierung die Anordnung der Litze(n) genau an den Stellen erfolgen, an denen ein Wärmeeintrag in die Medienleitung und die Leitungsverbinder gewünscht wird bzw. erforderlich ist. Gegenüber einer in eine Rohrleitungswandung integrierten Litze kann vielmehr eine Leitung adaptiv unterschiedlich bewickelt werden, insbesondere mit einer gewünschten Steigung. Bei einem im Stand der Technik bekannten Einbetten einer Litze in eine Rohrleitungswandung ist dies Teil des Extrusionsverfahrens zum Herstellen der Rohrleitung, somit stets sehr viel schwieriger zu variieren. Ferner schafft eine adaptive Anbringung die Möglichkeit, eine Rohrleitung mit geringerer Wandstärke herzustellen/vorzusehen, somit einen geringeren Materialbedarf zu haben im Vergleich zum Einbetten von Litzen in die Rohrleitungswandung, was zu einem vergleichsweise erhöhten Materialbedarf führt.

Es wird somit erfindungsgemäß ein Bewicklungsprozess vorgesehen, bei dem getrennt voneinander die Baugruppe, die die Medienleitung und zumindest einen endseitig montierten Leitungsverbinder beinhaltet, und die Baugruppe, die das Heizelement umfasst, vormontiert werden und erst danach beide Baugruppen zu einem Produkt integriert werden, nämlich der beheizbaren Medienleitung. Eine weitere Baugruppe stellt nachfolgend die Einrichtung zur Isolation bzw. zum Schutz dar, also insbesondere eine Ummantelung durch Wellrohr und Schutzkappen. Durch das Vorsehen solcher Baugruppen wird somit ein modulares System geschaffen, also eine modular aufgebaute beheizbare Medienleitung, das oder die es zulässt, dass kostengünstig unterschiedlichste Ausführungsvarianten von beheizbaren Medienleitungen geschaffen werden, die sich ferner in kurzer Zeit montieren lassen.

Zur näheren Erläuterung der Erfindung werden im Folgenden Ausführungsbeispiele von dieser näher anhand der Zeichnungen beschrieben. Diese zeigen in:
- Figur 1: eine Schnittansicht einer ersten Ausführungsform einer erfindungsgemäß beheizbaren Medienleitung,
- Figur 2: eine Seitenansicht einer vorkonfektionierten Medienleitung mit zwei Leitungsverbindern,
- Figur 3: eine Draufsicht auf eine erste Ausführungsform eines Heizelementes in Form einer einteiligen doppelt gelegten Litze mit Kaltleiteranschluss und Steckverbinder zum Anschließen an eine Energiequelle,
- Figur 4: ein elektrisches Schaltbild des Heizelementes gemäß Figur 3,
- Figur 5: eine Draufsicht auf eine zweite Ausführungsform eines Heizelementes mit zwei miteinander verbundenen Litzen,
- Figur 6: eine Draufsicht auf eine dritte Ausführungsform eines Heizelementes mit zwei Litzen, die jeweils endseitig mit Kaltleiteranschlüssen und Steckverbindern versehen sind,
- Figur 7: eine Draufsicht auf eine weitere Ausführungsform eines Heizelementes in Form einer einteiligen, doppelt gelegten Schlaufe mit endseitig direkt angeschlossenem Steckverbinder,
- Figur 8: eine Draufsicht auf eine weitere Ausführungsform einer erfindungsgemäßen fertig montierten beheizbaren Medienleitung mit offener Schutzkappe,
- Figur 9: eine Detailansicht des gewinkelten Leitungsverbinders gemäß Figur 8,
- Figur 10: eine Draufsicht auf eine Ausführungsvariante eines geraden Leitungsverbinders mit Heizelement und geöffneter Schutzkappe,
- Figur 11a: eine Draufsicht auf eine Medienleitung mit erfindungsgemäß entlang von dieser angeordneter, parallel zu dieser geführter Litze,
- Figur 11b: eine Querschnittsansicht durch die Medienleitung mit Litze gemäß Figur 11a,
- Figur 12: eine Detailansicht einer erfindungsgemäßen Medienleitung mit um diese gewendelter Litze eines Heizelementes,
- Figur 13: eine Querschnittsansicht durch eine erfindungsgemäße beheizbare Medienleitung mit parallel entlang der Medienleitung geführter Litze,
- Figur 14: ein Diagramm zur Darstellung einer optimalen Steigung, aufgetragen ist die Heizleiterlänge über der Steigung und die Leitungslänge,
- Figur 15: eine Detailansicht einer um eine erfindungsgemäße Medienleitung herum gewundenen Litze eines Heizelementes, wobei die Litze durch ein Klebeband oder Gewebeband auf der Außenseite der Medienleitung fixiert ist, und
- Figur 16: eine Draufsicht auf eine erfindungsgemäße beheizbare Medienleitung in Anordnung in einer Wickelmaschine zum Winden der Litzen des Heizelementes um die Medienleitung herum.

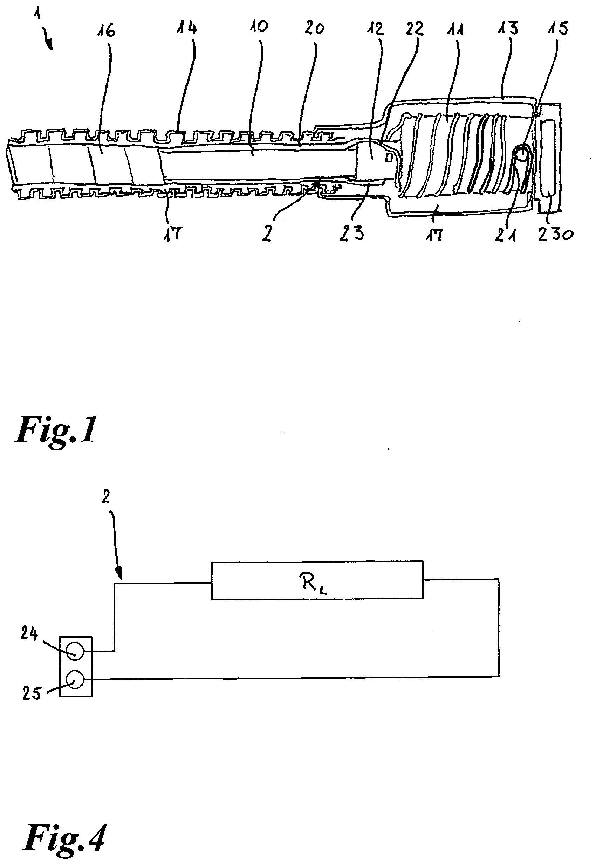

Figur 1 zeigt einen Abschnitt einer beheizbaren Medienleitung 1 mit einer rohrförmigen Medienleitung 10, einem Leitungsverbinder 11 mit einem Übergangsbereich 12, in dem Leitungsverbinder und Medienleitung 10 miteinander verbunden sind, einer Schutzkappe 13, die in der Regel zweiseitig bzw. aus zwei Halbschalen aufgebaut ist, die den Leitungsverbinder 11 sowie den Übergangsbereich 12 und einen Teil der rohrförmigen Medienleitung 10 schützend umschließt, sowie einem die rohrförmige Medienleitung 10 umgebenden Wellrohr 14. Endseitig an der Schutzkappe 13 ist ein Halteelement 230 zum Verbinden des Leitungsverbinders mit einer weiteren Leitung, einem Aggregat etc. über insbesondere einen Stecker angebracht. Entlang dem Leitungsverbinder 11 und der rohrförmigen Medienleitung 10 ist eine Litze 20 eines Heizelementes 2 geführt. Die Litze ist doppelt gelegt, so dass auf der Außenseite des Leitungsverbinders 11 eine Schlaufe 21 z.B. an einem Aufnahmezapfen 15 festgelegt ist. Die Litze weist somit zwei Teilabschnitte 22, 23 auf, die parallel zueinander ohne Steigung auf der Außenseite des Leitungsverbinders 11 gewickelt und im Übergangsbereich 12 voneinander getrennt auf zwei einander gegenüberliegende Seiten der Medienleitung 10 geführt sind. Eine solche parallele Anordnung ist allerdings nicht bevorzugt, da beim Krümmen der Medienleitung die Litze nicht in ihrer Position verbleibt, sondern dazu neigt, sich von der Medienleitungsoberfläche abzulösen.

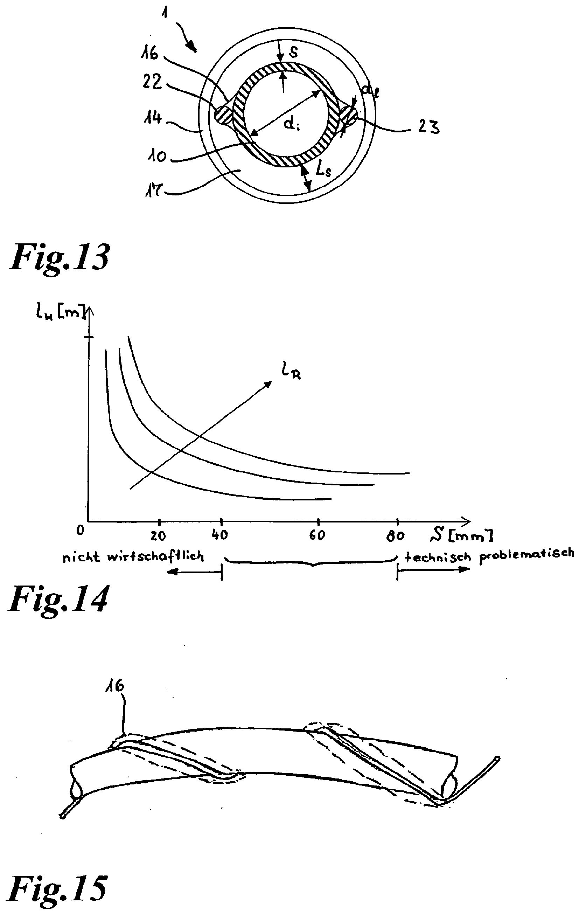

Um die beiden Litzen-Teilabschnitte 22, 23 in ihrer Position zu fixieren, ist außenseitig um die Medienleitung 10 mit aufgefügter Litze 20 ein Klebe- bzw. Gewebeklebe- bzw. Gewebeband 16 gewickelt. Von diesem ist lediglich ein Teilabschnitt in Figur 1 gezeigt. Grundsätzlich ist es möglich, lediglich in einem schmalen Bereich eine solche Fixierung vorzusehen, also nicht über die gesamte Längserstreckung der Medienleitung hinweg, sondern nur punktuell an zueinander beabstandeten Stellen. Ebenfalls ist es möglich, über die gesamte Längserstreckung der Medienleitung 10 hinweg das Klebe- bzw. Gewebeklebe- bzw. Gewebeband 16 oder eine andere Fixiereinrichtung zu wickeln. Das Klebe- bzw. Gewebeklebeband bzw. Gewebeband kann entweder der Litze folgen oder flächendeckend, ggf. sich überlappend, über der Litze und der Medienleitung angeordnet werden, wie zu Figur 15 näher erläutert.

Wie bereits erwähnt, wird zum äußeren Schutz und zur Isolation der Medienleitung 10 mit aufgefügter Litze 20 des Heizelements das Wellrohr 14 angeordnet. Aufgrund des Vorsehens eines Wellrohres ist eine Luftspaltbildung bzw. das Vorsehen von lufteinschließenden Kammern möglich, die eine Isolierung der Medienleitung ermöglichen. Auch zwischen dem Leitungsverbinder bzw. dem Übergangsbereich zur Medienleitung und der diese umschließenden Schutzkappe 13 ist ein solcher Luftspalt 17 angeordnet, wie Figur 1 ebenfalls entnommen werden kann.

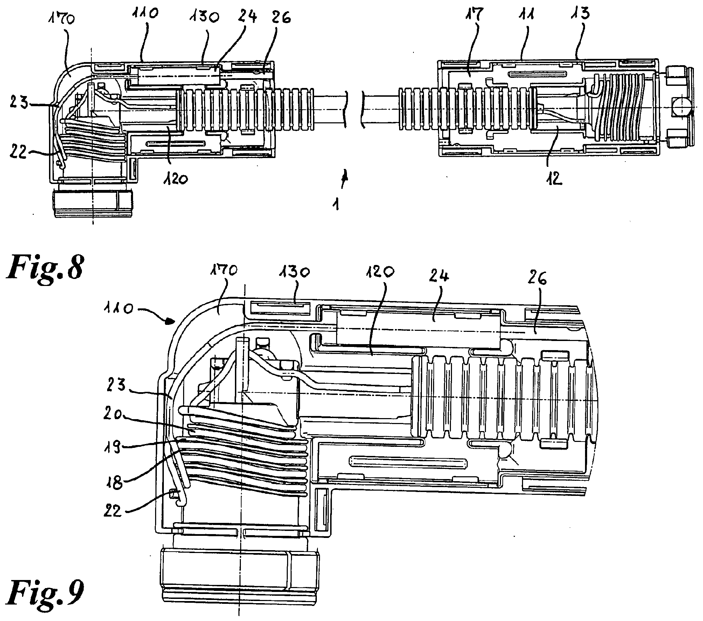

Wie besonders gut den Figuren 8 bis 10 zu entnehmen ist, kann die Litze 20 mit ihren beiden Teilabschnitten 22, 23 in Wickelnuten 18 auf der Außenseite des oder der Leitungsverbinder 11, 110 geführt werden. Die Wickelnuten werden durch vorstehende Rippen 19 auf der Außenseite des Leitungsverbinders begrenzt bzw. gebildet. Hierdurch ist eine eindeutige Positionierung der Litzen auf der Außenseite der Leitungsverbinder möglich, sodass eine Fixierung durch ein Klebe- oder Gewebeband, wie dies entlang der Medienleitung vorgesehen ist, hier entfallen kann. Sind derartige Wickelnuten nicht vorgesehen, kann selbstverständlich auch im Bereich des Leitungsverbinders 11, 110 eine Fixierung der des Heizelementes 2 durch beispielsweise ein Klebe- oder Gewebeband oder eine anderweitige Fixiereinrichtung erfolgen.

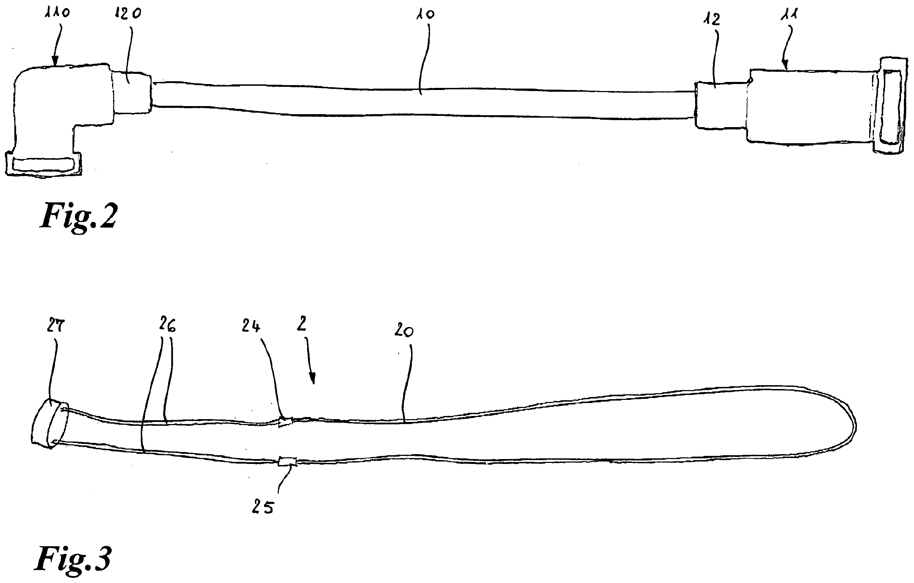

Figur 2 und 3 zeigen die beiden vorkonfektionierten Baugruppen, die nachfolgend zu der beheizbaren Medienleitung gemäß Figur 1 zusammengeführt und fertig montiert werden. Die in Figur 2 gezeigte Baugruppe ist die ein Fluid bzw. ein Medium leitende, die die rohrförmige Medienleitung 10 und zwei Leitungsverbinder 11, 110 mit jeweiligen Übergangsbereichen 12, 120 umfasst. Die in Figur 3 gezeigte Baugruppe ist das Heizelement 2, das gemäß Figur 3 aus der doppelt gelegten Litze 20 mit endseitig vorgesehenen Anschlüssen 24, 25 sowie hier angeschlossenen Kaltleitern 26 mit angeschlossenem Steckverbinder 27 besteht. Es wird somit die erste Baugruppe, bestehend aus zwei Leitungsverbindern und einer Medienleitung vorkonfektioniert, und die zweite für die Beheizung vorgesehene Baugruppe des Heizelementes mit angeschlossenen Kaltleitern und Steckverbinder zum Verbinden mit einer Energiequelle. Diese beiden Baugruppen werden nachfolgend miteinander "verheiratet", also die Baugruppe des Heizelementes auf der Außenseite von Leitungsverbindern, Übergangsbereichen und Medienleitung entlang geführt bzw. gewunden. Hierdurch entfällt der sonst übliche Arbeitsaufwand eines Ablängens der Medienleitung mit bereits um diese herum gewundenen Litzen eines Heizelements, was zu einer Reduzierung des Montageaufwandes und auch zu einer Reduzierung der Kosten führt, da bei der erfindungsgemäßen Montage zweier vormontierter Baugruppen weniger Abfall anfällt.

Nach dem Zusammenführen von erster und zweiter Baugruppe wird das Heizelement zumindest teilweise auf der Außenseite der ersten Baugruppe fixiert, ein über der Längsachse geöffnetes Wellrohr, was nachfolgend als geschlitztes Wellrohr 14 bezeichnet wird, auf der Außenseite der Medienleitung 10 und der Übergangsbereiche 12, 120 aufgebracht durch radiales Auffügen und die Leitungsverbinder 11, 110 ebenso wie ein Teil des Wellrohres 14 von den Schutzkappen 13, 130 umschlossen. Die Schutzkappen werden zumeist zum weiteren Isolieren in dem inneren Luftspalt 17, 170 (siehe Figuren 8 bis 10) ausgeschäumt.

Anstelle des Vorsehens einer mit zwei Leitungsverbindern 11, 110 vorkonfektionierten Medienleitung 10 kann diese auch lediglich mit nur einem Leitungsverbinder als erste Baugruppe vorkonfektioniert sein. Eine solche erste Baugruppe wird wie vorstehend beschrieben mit der zweiten Baugruppe des Heizelements mit ggf. angefügten Kaltleitern und Steckverbinder zusammengeführt und verbunden. Die Wellrohr-Montage ist dann jedoch leichter möglich als bei dem vorstehend beschriebenen Vorgehen, da dieses axial von dem freien Ende der Medienleitung 10 aus auf diese aufgeschoben werden kann. Erst nachfolgend wird an dem freien Ende der Medienleitung 10 der zweite Leitungsverbinder montiert und werden die Schutzkappen über beide Leitungsverbinder aufgefügt, incl. evtl. Ausschäumen der inneren Hohlräume der Schutzkappen.

Die fertig montierte beheizbare Medienleitung 1 kann dann nachfolgend formgebogen werden, um an den Einbauort angepasst zu werden. Zu diesem Zweck bestehen Medienleitung 10 und Wellrohr 14 vorteilhaft aus einem biegbaren Material.

Figur 4 zeigt ein elektrisches Ersatzschaltbild des Heizelementes gemäß Figur 3, wobei ersichtlich ist, dass lediglich noch zwei Anschlussstellen 24, 25 bzw. Crimpstellen zum Verbinden von Heizelement und Kaltleitern 26 erforderlich ist, im Gegensatz zu den sonst üblichen fünf Anschlussstellen. Ferner stellt das Heizelement auch lediglich noch einen einzigen Widerstand RL dar, so dass gegenüber der üblichen Anordnung von zumindest vier Litzen bzw. Heizelementteilen, die jeweils für sich einen Widerstand im elektrischen Ersatzschaltbild darstellen, die elektrische Verschaltung und Verkabelung einfacher und damit auch kostengünstiger wird.

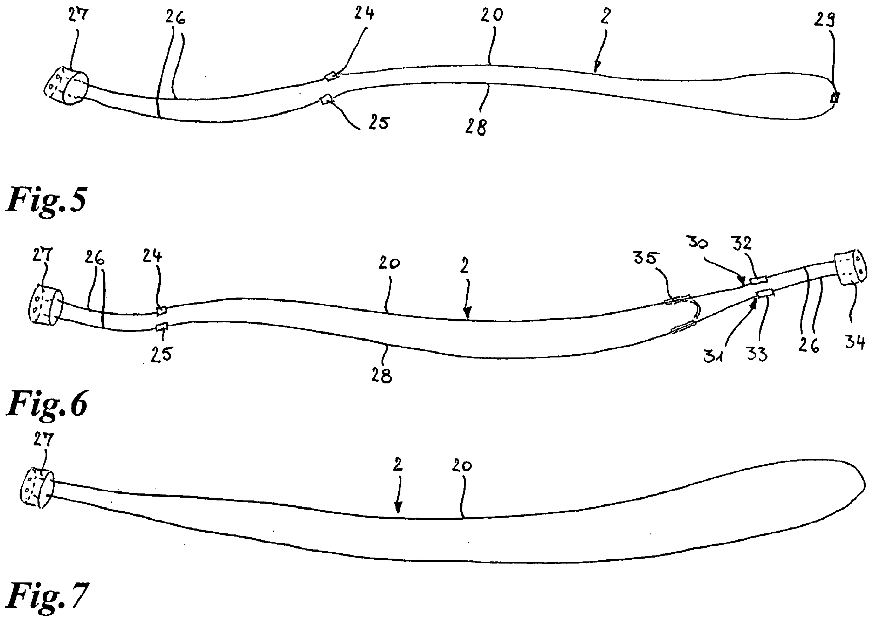

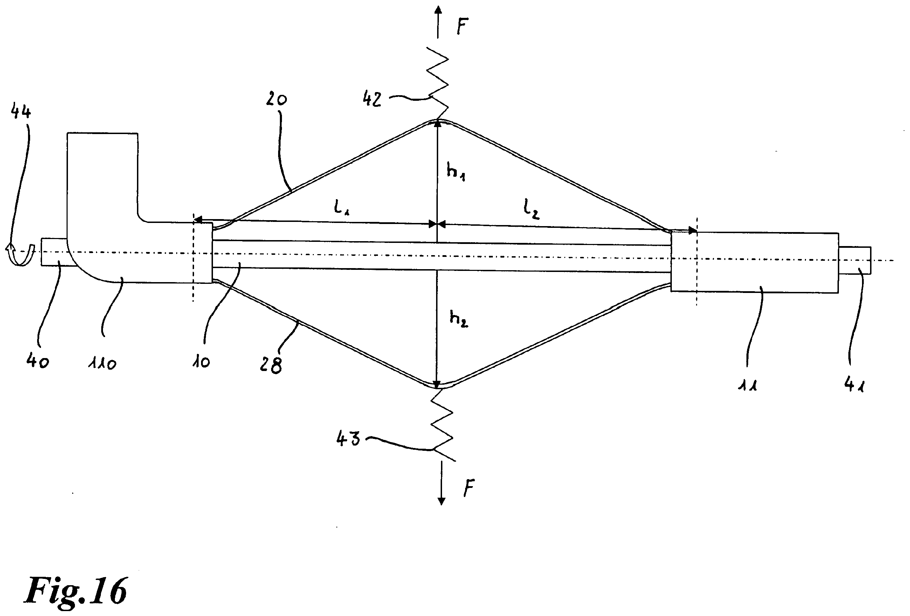

Dies trifft auch auf die Ausführungsform des Heizelements 2 gemäß Figur 5 zu, bei der das Heizelement aus zwei Litzen 20, 28 zusammengesetzt ist, die gleich lang ausgebildet sind. Diese beiden Litzen sind an ihrem einen Ende miteinander verbunden, was durch die Verbindungsstelle 29 angedeutet ist. Hierdurch entsteht wiederum ein schlaufenförmiges Heizelement, das an seinen beiden Enden über Anschlüsse 24, 25 mit zwei Kaltleitern 26 verbunden ist, die ihrerseits wiederum mit dem Steckverbinder 27 verbunden sind, um einen Anschluss an eine Strom- oder Spannungsquelle für das Heizelement 2 zu ermöglichen. Ein solches Heizelement kann in einem kontinuierlichen Bewicklungsprozess auf die Medienleitung aufgebracht werden, bevorzugt wird jedoch ein diskontinuierlicher, um Verschnitt zu vermeiden. Bei einem kontinuierlichen Bewicklungsprozess wird die Litze gleichmäßig von einem Ende der Medienleitung zur anderen gewickelt, wohingegen beim diskontinuierlichen Bewicklungsprozess die Bewicklung an beiden Enden gleichzeitig zur Mitte hin erfolgt, wie dies zu Figur 16 weiter unten beschrieben ist.

Bei der Ausführungsform des Heizelementes gemäß Figur 6 weist dieses ebenfalls zwei Litzen 20, 28 auf. Diese sind jedoch nicht über eine einzige Verbindungsstelle 29 miteinander verbunden, sondern im Bereich ihres einen Endes wiederum über die Anschlüsse 24, 25 mit Kaltleitern 26 verbunden. An ihren gegenüberliegenden Enden 30, 31 sind sie ebenfalls mit Anschlüssen 32, 33 zum Verbinden mit zwei Kaltleitern 26 versehen. Auch diese beiden Kaltleiter sind mit einem Steckverbinder 34 verbunden, um einen Anschluss des Heizelementes an eine Energiequelle zu ermöglichen. Ebenso wie zu Figur 5 erwähnt, kann auch bei der Ausführungsform gemäß Figur 6 eine kontinuierliche Bewicklung vorgesehen werden, wobei jedoch Verschnitt entsteht, oder eine diskontinuierliche Bewicklung, bei der kein Verschnitt auftritt, somit keine Litzen endseitig in der Länge angepasst werden müssen.

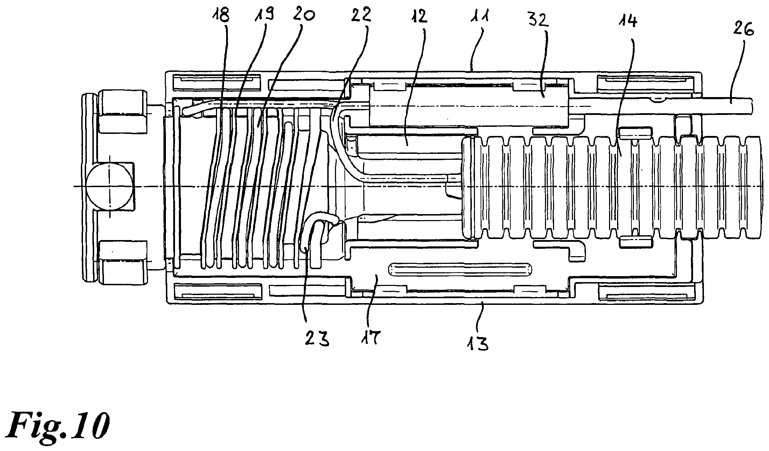

Um die beiden Litzen 20, 28 im Leitungsverbinder 11 bzw. 110 festlegen zu können, ist ein Bügelelement 35 vorgesehen. Dieses ist sowohl mit der Litze 20 als auch mit der Litze 28 verbunden, wie Figur 6 entnommen werden kann. Aufgrund der Bügelform des Bügelelementes 35 ist es möglich, dieses beispielsweise an dem Aufnahmezapfen 15 des Leitungsverbinders 11 festzulegen, also den Aufnahmezapfen 15 mit dem Bügelelement zu umschlingen. Die außerhalb des Bügelelementes sich erstreckenden Enden 30, 31 der Litzen 20, 28 mit angeschlossenen Kaltleitern 26 können ebenso wie die gegenüberliegenden Enden der beiden Litzen 20, 28 als Abzweigleitungen aus der beheizbaren Medienleitung herausgeführt werden. Dies ist insbesondere in Figur 10 angedeutet. Der Anschluss 32 an den Kaltleiter 26 ist hier als Crimpstelle innerhalb der Schutzkappe 13 gezeigt. Der Kaltleiter 26 ist außerhalb des Wellrohres 14 aus der Schutzkappe 13 herausgeführt. Eine entsprechende Lösung ist auch in Figur 9 bzw. Figur 8 gezeigt. Hierdurch wird der Kaltleiter an der gewünschten Stelle bezüglich des Leitungsverbinders und insbesondere bezüglich des Heizelementes fixiert, so dass auch bei Erschütterungen, wie sie beispielsweise beim Betrieb in einem Lkw vorkommen können, ein ungewolltes Lösen des Heizelementes von dem Kaltleiter bestmöglich vermieden werden.

Bei der Ausführungsform des Heizelements 2 gemäß Figur 7 ist dieses als einteilige Litze 20 direkt mit dem Steckverbinder 27 verbunden, über den ein Anschluss an einer Strom- oder Spannungsquelle möglich ist. Eine Anschlussmöglichkeit kann auch direkt im Leitungsverbinder bzw. den Schutzkappen integriert sein. Somit entfiele das separate Vorsehen des Steckverbinders 27.

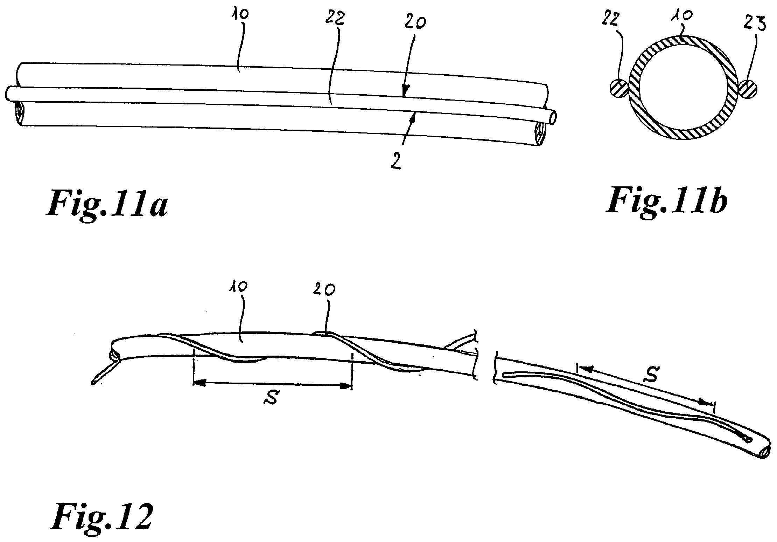

Die Figuren 11a und 11b zeigen die rohrförmige Medienleitung 10 mit den beiden Teilabschnitten 22, 23 der Litze 20, die auf einander gegenüberliegenden Seiten der Medienleitung parallel zu dieser angeordnet sind. Hierdurch wird zwar der effizienteste Materialeinsatz ermöglicht, auch reicht die Wärmeeinkopplung grundsätzlich aus, um das innerhalb der Medienleitung strömende Medium ausreichend zu erwärmen, jedoch ist es nicht möglich, die Medienleitung beliebig zu krümmen, da sich hierbei die beiden Teilabschnitte 22, 23 der Litze 20 verschieben, also nicht in der gewünschten Position verbleiben. Es hat sich gezeigt, dass insbesondere bei einer Steigung der Litze entlang der Medienleitung von unendlich, jedoch auch noch bei einer Steigung von 300 mm diese unkontrolliert auf der Außenseite der Medienleitung rutscht und sich bei deren Krümmen in einen beliebigen Radius legt, der im Zweifel nicht der Krümmung der Medienleitung entspricht. Es wird daher eine geringere Steigung, insbesondere eine Steigung S von 20 bis 150 mm bevorzugt. Entsprechend Figur 12 ist das Umwickeln der Medienleitung 10 mit der Litze 20 mit einer solchen geringeren Steigung S angedeutet. In Figur 12 sind zwei Varianten des Anordnens der Litze(n) auf der Medienleitung, nämlich ein Umwickeln und ein Anordnen in Wellenlinienform gezeigt, wobei bei beiden Varianten die Steigung S der Litzenwicklung angedeutet ist.

Wie das Diagramm in Figur 14 zeigt, kann diese Steigung S, im Diagramm in mm angegeben, in Abhängigkeit von der Heizelementlänge IH, die in dem Diagramm in Figur 14 in Metern angegeben ist, und von der Länge IR der Medienleitung variiert werden, wobei die Länge der Medienleitung in Pfeilrichtung zunimmt. Entsprechend dem Diagramm in Figur 14 erweist sich ein Bereich zwischen 20 und 150 mm Steigung als wirtschaftlich und technisch praktikabel, wobei ein Bereich von 40 bis 60 mm Steigung sich als der günstigste Bereich erweist. Dies gilt sowohl beim Vorsehen eines Heizelementes mit einer Litze als auch eines Heizelementes mit zwei parallel zueinander geführten gleichen Litzen, wobei endseitig null bis vier Kaltleiter bzw. Zuleiter an dem Heizelement angeordnet werden können.

Figur 13 zeigt noch einmal einen Querschnitt durch die fertig montierte beheizbare Medienleitung 1 im Bereich der rohrförmigen Medienleitung 10, wobei die beiden Teilabschnitte 22, 23 der Litze 20 des Heizelementes 2 an dieser Stelle auf einander gegenüberliegenden Seiten der rohrförmigen Medienleitung 10 angeordnet sind. Die Fixierung der Litze durch das Klebe-, Gewebeklebe- oder Gewebeband 16 ist ebenso angedeutet wie die Ummantelung mit dem Wellrohr 14. Der Innendurchmesser di der rohrförmigen Medienleitung 10 kann beispielsweise zwischen 2 und 4 mm betragen, insbesondere 2 bis 3 mm. Die Wandstärke s der rohrförmigen Medienleitung 10 kann 0,5 bis 1 mm betragen, insbesondere 0,7 mm. Die Litze 20 kann einen Durchmesser von dl = 0,12 bis 0,18, insbesondere 0,14 mm betragen. Der zwischen der Außenseite der Medienleitung 10 und der Innenseite des Wellrohres 14 verbleibende Luftspalt 17 kann einen Betrag LS zwischen 0,1 und 0,4 mm betragen, insbesondere 0,2 mm, wobei aufgrund des Vorsehens des Wellrohres in den Wellenbergen jeweils ein größerer Luftspalt vorgesehen ist als in den Wellentälern.

Wie den Figuren 8 bis 10 noch entnommen werden kann, können gerade und/oder abgewinkelte Leitungsverbinder vorgesehen werden, je nachdem, wie die sonstige Anschlussgeometrie beispielsweise in einem Fahrzeug gestaltet ist. Auch die Medienleitung kann nach dem vollständigen Konfektionieren der beheizbaren Medienleitung beliebig gekrümmt und an die Gegebenheiten des Einbauraumes im Fahrzeug oder an der entsprechenden Stelle, an der die beheizbare Medienleitung angeordnet werden soll, angepasst werden. Gerade aus diesem Grunde wird darauf geachtet, dass die Steigung der Litze(n) 20, 28 entlang der rohrförmigen Medienleitung 10 so gewählt ist, dass diese auch beim Formbiegen der Medienleitung erhalten bleibt, wobei die Steigung über die Medienleitung hinweg aufgrund Längenausgleichs variieren kann, und somit eine optimale Beheizung des Mediums innerhalb der Medienleitung sichergestellt werden kann. Die beheizbare Medienleitung wird zumeist unter Wärmeeinfluss formgebogen, um eine bleibende Verformung vorzusehen. Das Formbiegen kann bspw. unter Heißdampf oder in einem Ofen erfolgen.

Zur Fixierung des Heizelementes auf der Außenseite der rohrförmigen Medienleitung 10 wird, wie bereits erwähnt, ein Klebe- oder Gewebeband 16 verwendet. Als besonders wirtschaftlich erweist sich das Verkleben bzw. Fixieren durch Führen des Klebe-, Gewebeklebe- oder Gewebebandes 16 entlang den Litzen 20 bzw. 28, wie dies in Figur 15 angedeutet ist. Hierdurch kann nicht nur eine besonders gute Fixierung der Litze auf der Oberseite der Medienleitung vorgesehen werden, sondern auch der Bedarf an Klebe-, Gewebeklebe- oder Gewebeband 16 entsprechend gering gehalten werden. Alternativ ist es möglich, eine vollständige radiale Umwicklung von Litzen und rohrförmiger Medienleitung, beispielsweise mit einem schmalen Klebe-, Gewebeklebe- oder Gewebeband, vorzusehen, wobei eine radiale Überlappung beim Umwickeln sich als vorteilhaft erweist, um ausreichende Zugspannung vorsehen zu können.

In Figur 16 sind Teile einer Wickelmaschine zum Aufwickeln der Litzen 20, 28 um die rohrförmige Medienleitung 10 herum angedeutet. Hierbei ist die Medienleitung 10 mit dem abgewinkelten Leitungsverbinder 110 und einem geraden Leitungsverbinder 11 an ihren beiden Enden versehen. Beide Leitungsverbinder sind in einer ersten und in einer zweiten Aufnahme 40, 41 der Wickelmaschine, die ansonsten nicht detailliert gezeigt ist, angeordnet, die jeweils ein Rotieren der vorkonfektionierten Baugruppe aus Medienleitung 10 und Leitungsverbindern 11, 110 ermöglicht. Dies ist durch einen entsprechenden Pfeil in Figur 16 angedeutet.

Die beiden Litzen 20, 28 sind entlang ihrer Längserstreckung etwa im mittleren Bereich der Medienleitung 10 in Richtung weg von dieser mit einer Zugkraft F beaufschlagt. Diese wird durch Angreifen von Federn 42, 43 an den beiden Litzen 20, 28 erzeugt. Aufgrund der Kombination aus der Drehbewegung und der Vorspannung ist es möglich, die Litzen unter Zugspannung auf der Außenseite der Medienleitung 10 aufzuwickeln. Um ein überschneidungsfreies Bewickeln zu ermöglichen, werden jeweils die Längen l1 und l2 und auch die Höhenabstände h1 und h2 , wie sie in Figur 16 bezüglich der Längs- und der Höhenerstreckung der beiden Litzen 20, 28 angedeutet sind, gleichgesetzt. Die Längen l1 und l2 sind jeweils gemessen von den Enden der Medienleitung 10 zu der Position des Angriffs der Zugkraft F an den beiden Litzen und die Höhenabstände h1 und h2 sind jeweils gemessen an der Position der Zugkrafteinwirkung auf die Litzen 20, 28 in Bezug auf die Außenseite der Medienleitung 10.

Beim Bewickeln kann die Steigung über die Längserstreckung der Medienleitung 10 hinweg leicht variieren, wobei sich aufgrund der Ausschöpfung des Toleranzfeldes nur eine Steigung innerhalb einer Toleranz ergibt. Es ist jedoch möglich, beim kontinuierlichen Bewickeln von einem Ende der Medienleitung zum anderen eine bewusste Varianz der Steigung vorzusehen oder beim Bewickeln zur Mitte hin (diskontinuierlichen Bewickeln) eine zufällige Varianz zu erhalten. Je nach dem, an welcher Stelle ein besonders großer Wärmeeintrag gefordert wird, kann partiell eine variable Steigung bzw. eine geringere Steigung bei höherem gewünschtem Wärmeeintrag vorgesehen werden. Die Anzahl der Umschlingungen ist dabei größer als in dem übrigen Bereich der beheizbaren Medienleitung. Durch das Vorsehen der in Figur 16 angedeuteten Wickelmaschine ist eine besonders genaue Positionierung der Litzen entlang der Medienleitung möglich.

Neben den im Vorstehenden genannten und in den Figuren gezeigten Ausführungsvarianten von beheizbaren Medienleitungen können noch zahlreiche weitere gebildet werden, bei denen jeweils zumindest ein Leitungsverbinder und Heizelement mit wenigen, insbesondere ein oder zwei Litzen, vorgesehen ist, wobei sich das Heizelement entlang dem Leitungsverbinder und der Medienleitung erstreckt und die Litze oder Litzen verbindungsstellenfrei im Übergangsbereich zwischen der Medienleitung und dem Leitungsverbinder und durchgängig entlang dem Leitungsverbinder und der Medienleitung auf deren jeweiliger Außenseite erstreckt bzw. erstrecken. Bei der Herstellung einer solchen beheizbaren Medienleitung wird jeweils zunächst eine zum Durchströmen mit einem Medium vorgesehene erste Baugruppe, bestehend aus Medienleitung und zumindest einem Leitungsverbinder, vorkonfektioniert und eine zweite Baugruppe, bestehend aus dem Heizelement mit ein oder zwei Litzen, und diese nachfolgend erst zusammengeführt und miteinander verbunden, wobei das Heizelement auf der Außenseite der ersten Baugruppe angeordnet und an dieser festgelegt wird.

### Bezugszeichenliste

- 1: beheizbare Medienleitung
- 2: Heizelement
- 10: rohrförmige Medienleitung
- 11: Leitungsverbinder
- 12: Übergangsbereich
- 13: Schutzkappe
- 14: Wellrohr
- 15: Aufnahmezapfen
- 16: Klebe-, Gewebeklebe- oder Gewebeband
- 17: Luftspalt
- 18: Wickelnut
- 19: Rippe
- 20: Litze
- 21: Schlaufe
- 22: Teilabschnitt
- 23: Teilabschnitt
- 24: Anschluss
- 25: Anschluss
- 26: Kaltleiter
- 27: Steckverbinder
- 28: Litze
- 29: Verbindungsstelle
- 30: Ende
- 31: Ende
- 32: Anschluss
- 33: Anschluss
- 34: Steckverbinder
- 35: Bügelelement
- 40: erste Aufnahme
- 41: zweite Aufnahme
- 42: Feder
- 43: Feder
- 44: Pfeil
- 110: Leitungsverbinder
- 120: Übergangsbereich
- 130: Schutzkappe
- 170: Luftspalt
- 230: Halteelement
- R_{L}: Widerstand Heizelement
- S: Steigung
- I_{H}: Heizelementlänge
- I_{R}: Medienleitungslänge
- s: Wandstärke Medienleitung
- dᵢ: Innendurchmesser von 10
- dₗ: Durchmesser Litze
- s: Wandstärke
- L_{S}: Luftspaltstärke
- F: Zugkraft

## Patentansprüche

1. Beheizbare Medienleitung (1) mit zumindest einem Leitungsverbinder (11,110) und Heizelement (2), wobei das Heizelement (2) zwei Litzen (20,28) aufweist,
**dadurch gekennzeichnet, dass**
sich ein und dieselben Litzen (20,28) durchgängig sowohl entlang der Medienleitung (10) als auch entlang dem zumindest einen Leitungsverbinder (11,110) erstrecken, wobei die zwei Litzen (20,28) sich verbindungsstellenfrei im Übergangsbereich (12,120) zwischen Medienleitung (10) und Leitungsverbinder (11,110) und durchgängig entlang dem Leitungsverbinder (11,110) und der Medienleitung (10) auf deren jeweiliger Außenseite erstrecken, wobei ein beide Litzen (20,28) verbindendes Bügelelement (35) an einem Aufnahmezapfen (15) auf der Außenseite des einen Leitungsverbinders (11) festgelegt ist oder den Aufnahmezapfen (15) umschlingt.

2. Beheizbare Medienleitung (1) nach Anspruch 1,
**dadurch gekennzeichnet, dass**
endseitig an den Litzen zumindest eine Abzweig- oder Anschlussstelle (2,25,32,33) vorgesehen ist zum Anschließen eines Verbinders (27) zum Anschließen an eine Energieversorgung.

3. Beheizbare Medienleitung (1) nach Anspruch 1 oder 2,
**dadurch gekennzeichnet, dass**
die Litzen (20,28) sich leitungsnah mit einer Steigung (S) von 20 bis 150 mm um die Medienleitung (10) herum erstrecken, insbesondere mit einer Steigung (S) von 40 bis 80 mm, mäandriert oder in Form von langgestreckten Wellen oder spiralförmig geführt ist/sind.

4. Beheizbare Medienleitung (1) nach Anspruch 3,
**dadurch gekennzeichnet, dass**
die Litzen (20,28) sich in Form von zwei etwa parallel geführten, insbesondere gleichen, Litzenabschnitten (22,23) auf einander gegenüberliegenden Seiten der Medienleitung (10) entlang von dieser erstrecken.

5. Beheizbare Medienleitung (1) nach einem der vorstehenden Ansprüche,
**dadurch gekennzeichnet, dass**
die Litzen (20,28) des Heizelements (2) zum Erzeugen einer gleichmäßigen Wärmeeinkopplung im Bereich des Leitungsverbinders (11,110) und der Medienleitung (10) sowie des Übergangsbereichs (12,120) zwischen Medienleitung (10) und Leitungsverbinder (11,110) mit einer angepasst unterschiedlichen Steigung (S) um diese gewickelt sind.

6. Beheizbare Medienleitung (1) nach einem der Ansprüche 1 bis 5,
**dadurch gekennzeichnet, dass**
die Litzenstärke (dₗ) des Heizelements (2) weniger als 0,2 mm beträgt, insbesondere 0,12 mm, 0,14 mm, 0,18 mm mit +/- 0,4 mm Toleranz beträgt.

7. Beheizbare Medienleitung (1) nach einem der vorstehenden Ansprüche oder nach dem Oberbegriff des Anspruchs 1,
**dadurch gekennzeichnet, dass**
die beheizbare Medienleitung (1) modular aufgebaut ist.

8. Verfahren zum Herstellen einer beheizbaren Medienleitung (1), umfassend die Medienleitung (10), zumindest einen Leitungsverbinder (11,110), einen Übergangsbereich (12,120) zwischen Medienleitung (10) und Leitungsverbinder (11,110) und zumindest ein Heizelement (2), wobei das Heizelement (2) ein oder zwei Litzen (20,28) aufweist,
**dadurch gekennzeichnet, dass**
die Medienleitung (10) mit dem zumindest einen Leitungsverbinder (11,110) vorkonfektioniert wird,
die ein oder zwei Litzen (20,28) des Heizelements (2) als doppelt gelegtes, ein- oder zweiteiliges oder zu einem durchgehenden Teil verbundenes Element vorkonfektioniert werden,
die Litze(n) (20,28) auf der Außenseite von Leitungsverbinder (11,110), Übergangsbereich (12,120) und Medienleitung (10) angeordnet, festgelegt und die Enden der Litze(n) in einen Einspeiseverbinder (24,25,27,32,33) zum Anschließen an einer Strom- oder Spannungsquelle geführt werden, wobei auf der Außenseite des einen Leitungsverbinders (11) ein Aufnahmezapfen (15) angeordnet ist, und wobei eine aus einer doppelt gelegten Litze (20) gebildete Schlaufe (21) oder ein beide Litzen (20,28) verbindendes Bügelelement (35) an dem Aufnahmezapfen (15) auf der Außenseite des einen Leitungsverbinders (11) festgelegt wird oder den Aufnahmezapfen (15) umschlingt und die Litze(n) (20,28) durchgehend entlang dem Leitungsverbinder (11,110), dem Übergangsbereich (12,120) und der Medienleitung (10) auf deren Außenseite geführt oder gewunden wird/werden.

9. Verfahren nach Anspruch 8,
**dadurch gekennzeichnet, dass**
die Teilabschnitte (22,23) der Litze(n) (20,28) oder die Litzen (20,28) entlang der Medienleitung (10) etwa parallel zueinander an zwei einander gegenüberliegenden Seiten der Medienleitung (10) und/oder mit einer sehr großen Steigung, insbesondere einer Steigung von 20 bis 150 mm, entlang der Medienleitung, und/oder langgestreckt mäanderförmig und/oder spiralförmig um die Medienleitung (10) herum gewickelt werden, insbesondere von einer zentralen Stelle der Medienleitung (10) aus um diese unter Vorspannung gewickelt werden.

10. Verfahren nach einem der Ansprüche 8 oder 9,
**dadurch gekennzeichnet, dass**
die Litze(n) (20,28) im Bereich des Leitungsverbinders (11,110) mit einer kleinen Steigung (S), insbesondere von weniger als 80 mm, angeordnet werden, insbesondere spiralförmig und/oder mäandriert um den Leitungsverbinder (11,110) herum gewickelt oder langgestreckt um den Leitungsverbinder (11,110) herum angeordnet werden.

11. Verfahren nach einem der Ansprüche 8 bis 10,
**dadurch gekennzeichnet, dass**
zumindest eine Einrichtung (13,130) zum Schutz und/oder zur Isolation der Medienleitung (10) und/oder des Leitungsverbinders (11,110) und/oder des Übergangsbereichs (12,120) zwischen Medienleitung (10) und
Leitungsverbinder (11,110) um diese herum angeordnet wird, insbesondere ein Wellrohr (14) zur Ummantelung der Medienleitung (10) und
Schutzkappen (13,130) zur Ummantelung des oder der Leitungsverbinder (11,110) und des Übergangsbereichs (12,120) zu der Medienleitung (10) diese umgebend angeordnet werden.

12. Verfahren nach Anspruch 11,
**dadurch gekennzeichnet, dass**
die Litze(n) (20,28), ein Befestigungsmittel (16) zum Befestigen der Litze(n) auf der Medienleitung (10) und/oder die Isolations- und/oder Schutzeinrichtung (13,130) zur Isolation und/oder zum Schutz der Medienleitung (10) und/oder des Leitungsverbinders (11,110) und/oder des Übergangsbereichs (12,120) zwischen Medienleitung (10) und Leitungsverbinder (11,110) adaptiv aufgebracht wird/werden.

## Claims

1. Heatable media pipe (1) having at least one pipe connector (11, 110) and heating element (2), wherein the heating element (2) has two wires (20, 28),
**characterised in that**
the same wires (20, 28) extend continuously both along the media pipe (10) and along the at least one pipe connector (11, 110), wherein the two wires (20, 28) extend in a joint-free manner in the transition region (12, 120) between the media pipe (10) and the pipe connector (11, 110) and continuously along the pipe connector (11, 110) and the media pipe (10) in each case on the outside thereof, wherein a stirrup element (35) connecting the two wires (20, 28) is fixed to a receiving pin (15) on the outside of one pipe connector (11) or is looped around the receiving pin (15).

2. Heatable media pipe (1) according to claim 1,
**characterised in that**
at least one branch or connecting point (2, 25, 32, 33) is provided at the end of the wires for connection of a connector (27) for connection to a power supply.

3. Heatable media pipe (1) according to claim 1 or 2,
**characterised in that**
the wires (20, 28) extendaround the media pipe (10) close to the pipe with a pitch (S) of from 20 to 150 mm, in particular with a pitch (S) of from 40 to 80 mm,is/are guided in a meandering manner or in the form of elongate waves or in a spiral shape.

4. Heatable media pipe (1) according to claim 3,
**characterised in that**
the wires (20, 28) extend along the media pipe (10) in the form of two approximately parallel, in particular identical, wire sections (22, 23) on opposite sides of the media pipe.

5. Heatable media pipe (1) according to any one of the preceding claims,
**characterised in that**
in order to generate a uniform heat input, in the region of the pipe connector (11, 110) and of the media pipe (10) and also of the transition region (12, 120) between the media pipe (10) and the pipe connector (11, 110) the wires (20, 28) of the heating element (2) are wound with an adapted variable pitch (S).

6. Heatable media pipe (1) according to any one of claims 1 to 5,
**characterised in that**
the wire thickness (dₗ) of the heating element (2) is less than 0.2 mm, in particular is 0.12 mm, 0.14 mm, 0.18 mm, with a tolerance of +/- 0.4 mm.

7. Heatable media pipe (1) according to any one of the preceding claims or according to the precharacterising clause of claim 1,
**characterised in that**
the heatable media pipe (1) is of modular construction.

8. Method of producing a heatable media pipe (1), comprising the media pipe (10), at least one pipe connector (11, 110), a transition region (12, 120) between the media pipe (10) and the pipe connector (11, 110), and at least one heating element (2), wherein the heating element (2) has one or two wires (20, 28),
**characterised in that**
the media pipe (10) is prefabricated with the at least one pipe connector (11, 110), the one or two wires (20, 28) of the heating element (2) are prefabricated as a doubled, one- or two-part element or as an element connected to form a continuous part,
the wire(s) (20, 28) are arranged on and fixed to the outside of the pipe connector (11, 110), the transition region (12, 120) and the media pipe (10) and the ends of the wire(s) are guided into an infeed connector (24, 25, 27, 32, 33) for connection to a power or voltage source, wherein a receiving pin (15) is arranged on the outside of the pipe connector (11), and wherein a loop (21) formed from a doubled wire (20) or a stirrup element (35) connecting the two wires (20, 28) is fixed to the receiving pin (15) on the outside of the pipe connector (11) or is looped around the receiving pin (15), and the wire(s) (20, 28) is/are guided or wound continuously along the pipe connector (11, 110), the transition region (12, 120) and the media pipe (10) on the outside thereof.

9. Method according to claim 8,
**characterised in that**
the portions (22, 23) of the wire(s) (20, 28) or the wires (20, 28) are wound along the media pipe (10) approximately parallel to one another on two opposite sides of the media pipe (10) and/or with a very large pitch, in particular a pitch of from 20 to 150 mm, along the media pipe, and/or in an elongate meandering manner and/or in a spiral shape around the media pipe (10), in particular are wound around the media pipe (10) starting from a central point thereof under tension.

10. Method according to either claim 8 or claim 9,
**characterised in that**
the wire(s) (20, 28) are arranged in the region of the pipe connector (11, 110) with a small pitch (S), in particular of less than 80 mm, in particular are wound around the pipe connector (11, 110) in a spiral shape and/or in a meandering manner or are arranged around the pipe connector (11, 110) in an elongated manner.

11. Method according to any one of claims 8 to 10,
**characterised in that**
at least one device (13, 130) for protecting and/or for insulating the media pipe (10) and/or the pipe connector (11, 110) and/or the transition region (12, 120) between the media pipe (10) and the pipe connector (11, 110) is arranged around them, in particular a corrugated pipe (14) for sheathing the media pipe (10) and protective caps (13, 130) for sheathing the pipe connector(s) (11, 110) and the transition region (12, 120) to the media pipe (10) are arranged surrounding them,

12. Method according to claim 11,
**characterised in that**
the wire(s) (20, 28), a fixing means (16) for fixing the wire(s) to the media pipe (10) and/or the insulating and/or protecting device (13, 130) for insulating and/or for protecting the media pipe (10) and/or the pipe connector (11, 110) and/or the transition region (12, 120) between the media pipe (10) and the pipe connector (11, 110) is/are applied adaptively.

## Revendications

1. Conduite chauffable pour fluides (1) avec au moins un connecteur de conduite (11, 110) et un élément chauffant (2), dans laquelle l'élément chauffant (2) présente deux torons (20, 28),
**caractérisée en ce que**
un et les mêmes torons (20, 28) s'étendent en continu aussi bien le long de la conduite pour fluides (10) que le long de l'au moins un connecteur de conduite (11, 110), dans laquelleles deux toron(s) (20, 28) s'étendent sans point de jonction dans la zone de transition (12,120) entre la conduite pour fluides (10) et le connecteur de conduite (11, 110) et en continu le long du connecteur de conduite (11, 110) et de la conduite pour fluides (10) sur leur côté extérieur respectif, dans laquelle un élément d'étrier (35) reliant les deux torons (20, 28) est fixé au niveau d'un tenon de réception (15) sur le côtéextérieur de l'un connecteur de conduite (11) ou entoure le tenon de réception (15),

2. Conduite chauffable pour fluides (1) selon la revendication 1,
**caractérisée en ce que**
au moins un point de bifurcation ou de raccordement (2, 25, 32, 33) est prévu côté extrémité au niveau des torons pour le raccordement d'un connecteur (27) pour le raccordement à un approvisionnement en énergie.

3. Conduite chauffable pour fluides (1) selon la revendication 1 ou 2,
**caractérisée en ce que**
le(s) toron(s) (20, 28) s'étendent autour de la conduite pour fluides (10) à proximité de la conduite avec une pente (5) de 20 à 150 mm, en particulier avec une pente (5) de 40 à 80 mm, est/sont guidé/s en forme de méandres ou en forme de vagues allongés ou en forme de spirale.

4. Conduite chauffable pour fluides (1) selon la revendication 3,
**caractérisée en ce que**
les torons (20, 28) s'étendent sous la forme de deux sections de torons (22, 23), guidées de manière à peu près parallèle, en particulier identiques, sur des côtés opposés l'un à l'autre de la conduite pour fluide (10) le long de celle-ci.

5. Conduite chauffable pour fluides (1) selon l'une quelconque des revendications précédentes,
**caractérisée en ce que**
les torons (20, 28) de l'élément chauffant (2) sont enroulés pour la génération d'une injection de chaleur uniforme au niveau du connecteur de conduite (11, 110) et de la conduite pour fluides (10) ainsi que de la zone de transition (12, 120) entre la conduite pour fluides (10) et le connecteur de conduite (11, 110) avec une pente (S) différente adaptéeautour de ceux-ci.

6. Conduite chauffable pour fluides (1) selon l'une quelconque des revendications 1 à 5,
**caractérisée en ce que**
l'épaisseur de toron (d1) de l'élément chauffant (2) est inférieure à 0,2 mm, est en particulier de 0,12 mm, 0,14 mm, 0,18 mm avec une tolérance de +/- 0,4 mm.

7. Conduite chauffable pour fluides (1) selon l'une quelconque des revendications précédentes ou selon le préambule de la revendication 1,
**caractérisée en ce que**
la conduite chauffable pour fluides (1) a une construction modulaire.

8. Procédé de fabrication d'une conduite chauffable pour fluides (1), comprenant la conduite pour fluides (10), au moins un connecteur de conduite (11, 110), une zone de transition (12, 120) entre la conduite pour fluides (10) et le connecteur de conduite (11, 110) et au moins un élément chauffant (2), dans lequel l'élément chauffant (2) présente un ou deux torons (20, 28),
**caractérisé en ce que**
la conduite pour fluides (10) est préconfectionnée avec au moins un connecteur de conduite (11, 110),
les uns ou deux torons (20, 28) de l'élément chauffant (2) sont préconfectionnés sous forme d'élément disposé en double, à une ou deux parties ou relié à une partie continue,
le(s) toron(s) (20, 28) sont agencés sur le côté extérieur du connecteur de conduite (11, 110), de la zone de transition (12, 120) et de la conduite pour fluides (10), fixés et les extrémités du(des) toron(s) sont guidées dans un connecteur d'alimentation (24, 25, 27, 32, 33) pour le raccordement à une source de courant ou de tension, dans lequel un tenon de réception (15) est agencé sur le côté extérieur de l'un connecteur de conduite (11), et dans lequel une boucle (21) formée d'un toron disposé en double (20) ou un élément d'étrier (35) reliant les deux torons (20, 28) est fixé au niveau du tenon de réception (15) sur le côté extérieur de l'un connecteur de conduite (11) ou entoure le tenon de réception (15) et le(s) toron(s) (20, 28) est/sont enroulé/s ou guidé/s en continu le long du connecteur de conduite (11, 110), de la zone de transition (12, 120) et de la conduite pour fluides (10) sur leur côté extérieur.

9. Procédé selon la revendication 8,
**caractérisé en ce que**
les sections partielles (22, 23) du(des) toron(s) (20, 28) ou les torons (20, 28) sont enroulés le long de la conduite pour fluides (10) à peu parallèlement l'un à l'autre au niveau de deux côtés opposés l'un à l'autre de la conduite pour fluides (10) et/ou avec une très grande pente, en particulier une pente de 20 à 150 mm, le long de la conduite pour fluides (10), et/ou allongé en forme de méandres et/ou en forme de spirale autour de la conduite pour fluides (10),
en particulier sont enroulés à partir d'un point central de la conduite pour fluides (10) autour de celle-ci sous précontrainte.

10. Procédé selon l'une quelconque des revendications 8 ou 9,
**caractérisé en ce que**
le(s) toron(s) (20, 28) sont agencés au niveau du connecteur de conduite (11, 110) avec une petite pente (S), en particulier inférieure à 80 mm, sont enroulés en particulier en forme de spirale et/ou de méandres autour du connecteur de conduite (11, 110) ou sont agencés allongés autour du connecteur de conduite (11, 110).

11. Procédé selon l'une quelconque des revendications 8 à 10,
**caractérisé en ce que**
au moins un équipement (13, 130) de protection et/ou d'isolation de la conduite pour fluides (10) et/ou du connecteur de conduite (11, 110) et/ou de la zone de transition (12, 120) entre la conduite pour fluides (10) et le connecteur de conduite (11, 110) sont agencés autour de ceux-ci, en particulier un tuyau ondulé (14) pour le revêtement de la conduite pour fluides (10) et des capuchons de protection (13, 130) pour le revêtement du ou des connecteurs de conduite (11, 110) et de la zone de transition (12, 120) à la conduite de fluides (10) sont agencés en l'entourant.

12. Procédé selon la revendication 11,
**caractérisé en ce que**
le(s) toron(s) (20, 28), un moyen de fixation (16) pour la fixation du(des) toron(s) sur la conduite pour fluides (10) et/ou l'équipement d'isolation et/ou de protection (13, 130) pour l'isolation et/ou pour la protection de la conduite pour fluides (10) et/ou du connecteur de conduite (11, 110) et/ou de la zone de transition (12, 120) entre la conduite pour fluides (10) et le connecteur de conduite (11, 110) sont appliqués de manière adaptative.
